# EUROPEAN PATENT APPLICATION

(11) **EP 4 554 154 A1**
(43) Date of publication of application: **14.05.2025**
(21) Application number: 23842295.0
(22) Date of filing: 18.07.2023
(51) Int. Cl.: H04L 27/00

(54) **COMMUNICATION METHOD, COMMUNICATION APPARATUS AND COMMUNICATION SYSTEM**

(30) Priority: 20.07.2022 CN 202210852049
(71) Applicant: Huawei Technologies Co., Ltd., Shenzhen, Guangdong 518129 (CN)
(72) Inventor: MIN, Jian, Shenzhen, Guangdong 518129 (CN); SHENG, Xian, Shenzhen, Guangdong 518129 (CN); ZHONG, Wenguo, Shenzhen, Guangdong 518129 (CN); CAO, Heng, Shenzhen, Guangdong 518129 (CN); HU, Shipeng, Shenzhen, Guangdong 518129 (CN)
(74) Representative: Maiwald GmbH
(86) International application number: PCT/CN2023/107866
(87) International publication number: WO 2024/017232

(57) **Abstract**

Embodiments of this application provide a communication method, a communication apparatus, and a communication system. The communication method applied to a first apparatus includes: sending a first signal to a second apparatus, where a phase of the sent first signal is a first phase; receiving a second signal from the second apparatus, where the second signal and the first signal are two signals whose transmission directions are opposite on a first transmission path, a phase of the received second signal is a second phase, and the first phase and the second phase are used to adjust a data signal on the first transmission path. Based on this technical solution, because a phase difference between the first phase and the second phase carries impact of two-time and bidirectional transmission on a phase on the first transmission path, the first phase and the second phase may be used to adjust the data signal, to improve reliability of data signal transmission on the first transmission path.

## Description

### TECHNICAL FIELD

Embodiments of this application relate to the communication field, and more specifically, to a communication method, a communication apparatus, and a communication system.

### BACKGROUND

With the development of communication technologies, to improve a coverage capability of a network, a baseband unit (baseband unit, BU) and a radio unit (radio unit, RU) may be disposed at different geographical locations to jointly provide a service for a user. However, due to impact of an environment on a transmission path between the RU and the BU, a phase difference may exist in phases of data signals transmitted between the RU and the BU. The phase difference may cause a receiving end of the data signal to fail to correctly parse the data signal.

Therefore, a communication method, a baseband unit, and a radio unit are urgently needed to improve reliability of data transmission.

### SUMMARY

Embodiments of this application provide a communication method, a communication apparatus, and a communication system, to improve reliability of data transmission.

According to a first aspect, a communication method is provided. The method may be performed by a first apparatus or a chip in the first apparatus. The method includes: sending a first signal to a second apparatus, where a phase of the first signal is a first phase; and receiving a second signal from the second apparatus, where the second signal and the first signal are two signals whose transmission directions are opposite on a first transmission path, a phase of the received second signal is a second phase, and the first phase and the second phase are used to adjust a data signal on the first transmission path.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

In addition, the first signal and the second signal may be any signal received or sent between the first apparatus and the second apparatus. It may be understood that, in a case in which the first apparatus and the second apparatus process a data service, the first signal and the second signal may be data service signals that can be transmitted between the second apparatus and the first apparatus; and in a case in which the first apparatus and the second apparatus do not process the data service, the first signal and the second signal may be signals used for a communication negotiation between the first apparatus and the second apparatus. In other words, in this embodiment, a phase may be measured by using a signal transmitted between the first apparatus and the second apparatus, and dedicated transmission resources do not need to be allocated to the first signal and the second signal for phase measurement, so that frequent signal measurement can be supported, impact on service data transmission can be reduced, and consumption of transmission resources can be saved.

With reference to the first aspect, in some implementations of the first aspect, the method further includes: sending phase information to the second apparatus, where the phase information is determined based on the first phase and the second phase, and the phase information is used to adjust the data signal.

Based on this technical solution, because the second apparatus and the first apparatus have different design division of work, for example, in the ecpri transmission protocol, some baseband processing may be executed by the second apparatus, or may be executed by the first apparatus. In a scenario in which the data signal is adjusted to be more suitable for being executed by the second apparatus, the first apparatus may send the phase information to the second apparatus, so that this solution supports a flexible manner of adjusting the data signal.

With reference to the first aspect, in some implementations of the first aspect, the phase information indicates a measurement phase difference, and the measurement phase difference is determined based on the first phase and the second phase; or the phase information indicates a fluctuation phase difference, and the fluctuation phase difference is determined based on the measurement phase difference and a reference phase difference.

Based on this technical solution, when the phase information indicates the measurement phase difference, the measurement phase difference may be used to adjust the data signal on the first transmission path, so that impact of the first transmission path on the data signal transmitted between the first apparatus and the second apparatus is compensated, to improve reliability of data signal transmission.

When the phase information indicates the fluctuation phase difference, the measurement phase difference may not affect parsing of the data signal. For example, a receiving end of the data signal pre-configures or is indicated with the reference phase difference, and parses the data signal based on the reference phase difference. If a difference between the measurement phase difference and the reference phase difference is less than a specific threshold, the first apparatus or the second apparatus may no longer perform phase compensation on the data signal on the first transmission path based on the measurement phase difference. If the difference between the measurement phase difference and the reference phase difference is greater than or equal to the specific threshold, the first apparatus may perform phase compensation on the data signal on the first transmission path based on the difference between the reference phase difference and the measurement phase difference. Therefore, because a transmission distance of a transmission path usually does not change, and another environmental factor such as temperature usually changes slowly, impact of the transmission path on a phase of a data signal may be considered unchanged or slightly changed in a period of time. Therefore, after the first apparatus obtains the measurement phase difference through measurement, the first apparatus may compare the measurement phase difference with the reference phase difference, and adjust the data signal on the first transmission path based on the fluctuation phase difference between the measurement phase difference and the reference phase difference. Therefore, while reliability of data signal transmission is improved, a quantity of times or a degree of compensation performed on the data signal can be reduced, to improve efficiency of data signal transmission.

With reference to the first aspect, in some implementations of the first aspect, the reference phase difference is a reference phase difference for signal transmission on the first transmission path, or the reference phase difference is a reference phase difference for signal transmission on a second transmission path, and the second transmission path is a transmission path different from the first transmission path.

Based on this technical solution, when the reference phase difference is the reference phase difference for signal transmission on the first transmission path, phase compensation is performed based on the fluctuation phase difference obtained by using the reference phase difference, so that impact of the first transmission path on the phase of the data signal can be maintained at a constant level, and reliability of data signal transmission on the first transmission path can be improved. When the reference phase difference is the reference phase difference for signal transmission on the second transmission path, phase compensation is performed on the data signal on the first transmission path based on the fluctuation phase difference obtained based on the reference phase difference, so that impact of the two transmission paths on the phase of the data signal can be consistent, and reliability of cooperation of the plurality of transmission paths can be improved.

With reference to the first aspect, in some implementations of the first aspect, the phase information indicates a corresponding value obtained by converting the measurement phase difference into at least one frequency point, or the phase information indicates a corresponding value obtained by converting the fluctuation phase difference into the at least one frequency point.

Optionally, information corresponding to each of the at least one frequency point indicates a phase adjustment amount on the frequency point.

Based on this technical solution, the first apparatus may convert the obtained measurement phase difference or fluctuation phase difference into the at least one frequency point, so that processing complexity of adjusting the data signal by the second apparatus can be reduced.

With reference to the first aspect, in some implementations of the first aspect, the data signal is adjusted based on the first phase and the second phase.

For example, the first apparatus adjusts the data signal on the first transmission path based on the measurement phase difference or the fluctuation phase difference.

With reference to the first aspect, in some implementations of the first aspect, that the data signal is adjusted based on the first phase and the second phase includes: adjusting, based on the first phase and the second phase, frequency domain information corresponding to the data signal; adjusting, based on the first phase and the second phase, time domain information corresponding to the data signal; or adjusting clock information based on the first phase and the second phase, where the clock information is used to transmit the data signal.

Based on this technical solution, the first apparatus may support a plurality of manners of adjusting the data signal, so that various application scenarios can be supported.

With reference to the first aspect, in some implementations of the first aspect, the sending phase information to the second apparatus includes: sending the phase information to the second apparatus through a first interface, where the first interface is any one of the following interfaces: a common public radio interface CPRI or an enhanced common public radio interface eCPRI.

According to a second aspect, a communication method is provided. The method may be executed by a second apparatus or a chip in the second apparatus. The method includes: receiving a first signal from a first apparatus; and sending a second signal to the first apparatus, where the second signal and the first signal are two signals whose transmission directions are opposite on a first transmission path, a phase of the sent second signal is determined based on a phase of the received first signal, and the first signal and the second signal are used to adjust a data signal on the first transmission path.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

With reference to the second aspect, in some implementations of the second aspect, the method further includes: receiving phase information from the first apparatus, where the phase information is determined based on the first signal and the second signal; and adjusting the data signal on the first transmission path based on the phase information.

With reference to the second aspect, in some implementations of the second aspect, the phase information indicates a measurement phase difference, and the measurement phase difference is determined based on the first phase of the first signal sent by the first apparatus and the second phase of the second signal received by the first apparatus, or the phase information indicates a fluctuation phase difference, and the fluctuation phase difference is determined based on the measurement phase difference and a reference phase difference.

With reference to the second aspect, in some implementations of the second aspect, the reference phase difference is a reference phase difference for signal transmission on the first transmission path, or the reference phase difference is a reference phase difference for signal transmission on a second transmission path, and the second transmission path is a transmission path different from the first transmission path.

With reference to the second aspect, in some implementations of the second aspect, the phase information indicates a corresponding value obtained by converting the measurement phase difference into at least one frequency point, or the phase information indicates a corresponding value obtained by converting the fluctuation phase difference into the at least one frequency point.

With reference to the second aspect, in some implementations of the second aspect, the adjusting the data signal on the first transmission path based on the phase information includes: adjusting, based on the phase information, frequency domain information corresponding to the data signal; adjusting, based on the phase information, time domain information corresponding to the data signal; or adjusting clock information based on the phase information, where the clock information is used to transmit the data signal.

With reference to the second aspect, in some implementations of the second aspect, the receiving phase information from the first apparatus includes: receiving the phase information from the first apparatus through a first interface, where the first interface is any one of the following interfaces: a common public radio interface CPRI or an enhanced common public radio interface eCPRI.

The implementations of the second aspect are methods of the second apparatus corresponding to the implementations of the first aspect. For beneficial technical effects of the implementations of the second aspect, refer to descriptions of related implementations of the first aspect. Details are not described herein again.

According to a third aspect, a communication method is provided, where the method includes: A first apparatus sends a first signal to a second apparatus, where a phase of the first signal sent by the first apparatus is a first phase; and the second apparatus sends a second signal to the first apparatus, where the second signal and the first signal are two signals whose transmission directions are opposite on a first transmission path, a phase of the second signal sent by the second apparatus is determined based on the phase of the first signal received by the second apparatus, the phase of the second signal received by the first apparatus is a second phase, and the first phase and the second phase are used to adjust a data signal on the first transmission path.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

With reference to the third aspect, in some implementations of the third aspect, the first apparatus sends phase information to the second apparatus, where the phase information is determined based on the first phase and the second phase, and the phase information is used to adjust the data signal; and the second apparatus adjusts the data signal on the first transmission path based on the phase information.

With reference to the third aspect, in some implementations of the third aspect, the first apparatus adjusts the data signal based on the first phase and the second phase.

With reference to the third aspect, in some implementations of the third aspect, that the first apparatus sends phase information to the second apparatus includes: The first apparatus sends the phase information to the second apparatus through a first interface, where the first interface is any one of the following interfaces: a common public radio interface CPRI or an enhanced common public radio interface eCPRI.

The implementations of the third aspect are methods of a system corresponding to the implementations of the first aspect. For beneficial technical effects of the implementations of the third aspect, refer to descriptions of related implementations of the first aspect. Details are not described herein again.

According to a fourth aspect, a communication apparatus is provided. The communication apparatus includes a transceiver module and a processing module. The processing module is configured to generate a first signal, and the transceiver module is configured to send the first signal to a second apparatus, where a phase of the first signal sent by the first apparatus is a first phase. The transceiver module is further configured to receive a second signal from the second apparatus, where the second signal and the first signal are two signals whose transmission directions are opposite on a first transmission path, a phase of the second signal received by the first apparatus is a second phase, and the first phase and the second phase are used to adjust a data signal on the first transmission path.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

With reference to the fourth aspect, in some implementations of the fourth aspect, the transceiver module is further configured to send phase information to the second apparatus, where the phase information is determined based on the first phase and the second phase, and the phase information is used to adjust the data signal.

With reference to the fourth aspect, in some implementations of the fourth aspect, the phase information indicates a measurement phase difference, and the measurement phase difference is determined based on the first phase and the second phase; or the phase information indicates a fluctuation phase difference, and the fluctuation phase difference is determined based on the measurement phase difference and a reference phase difference.

With reference to the fourth aspect, in some implementations of the fourth aspect, the reference phase difference is a reference phase difference for signal transmission on the first transmission path, or the reference phase difference is a reference phase difference for signal transmission on a second transmission path, and the first transmission path is a transmission path different from the first transmission path.

With reference to the fourth aspect, in some implementations of the fourth aspect, the phase information includes corresponding information obtained by converting the measurement phase difference into at least one frequency point, or the phase information includes corresponding information obtained by converting the fluctuation phase difference into the at least one frequency point.

With reference to the fourth aspect, in some implementations of the fourth aspect, the processing module is configured to adjust the data signal based on the first phase and the second phase.

With reference to the fourth aspect, in some implementations of the fourth aspect, the processing module is configured to adjust, based on the first phase and the second phase, frequency domain information corresponding to the data signal; the processing module is configured to adjust, based on the first phase and the second phase, time domain information corresponding to the data signal; or the processing module is configured to adjust clock information based on the first phase and the second phase, where the clock information is used to transmit the data signal.

With reference to the fourth aspect, in some implementations of the fourth aspect, the transceiver module is configured to send the phase information to the second apparatus through a first interface, where the first interface is any one of the following interfaces: a common public radio interface CPRI or an enhanced common public radio interface eCPRI.

The implementations of the fourth aspect are apparatuses of the first apparatus corresponding to the implementations of the first aspect. For beneficial technical effects of the implementations of the fourth aspect, refer to descriptions of related implementations of the first aspect. Details are not described herein again.

According to a fifth aspect, a communication apparatus is provided. The communication apparatus includes a transceiver module and a processing module. The transceiver module is configured to receive a first signal from a first apparatus. The processing module is configured to generate a second signal, where the first signal and the second signal are used to adjust a data signal on a first transmission path. The transceiver module is further configured to send the second signal, where the second signal and the first signal are two signals whose transmission directions are opposite on the first transmission path, and a phase of the second signal sent by the transceiver module is determined based on a phase of the first signal received by the transceiver module.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

With reference to the fifth aspect, in some implementations of the fifth aspect, the transceiver module is further configured to receive phase information from the first apparatus, where the phase information is determined based on the first signal and the second signal; and the processing module is further configured to adjust the data signal on the first transmission path based on the phase information.

With reference to the fifth aspect, in some implementations of the fifth aspect, the phase information indicates a measurement phase difference, and the measurement phase difference is determined based on the first phase of the first signal sent by the first apparatus and the second phase of the second signal received by the first apparatus, or the phase information indicates a fluctuation phase difference, and the fluctuation phase difference is determined based on the measurement phase difference and a reference phase difference.

With reference to the fifth aspect, in some implementations of the fifth aspect, the reference phase difference is a reference phase difference for signal transmission on the first transmission path, or the reference phase difference is a reference phase difference for signal transmission on a second transmission path, and the second transmission path is a transmission path different from the first transmission path.

With reference to the fifth aspect, in some implementations of the fifth aspect, the phase information indicates a corresponding value obtained by converting the measurement phase difference into at least one frequency point, or the phase information indicates a corresponding value obtained by converting the fluctuation phase difference into the at least one frequency point.

With reference to the fifth aspect, in some implementations of the fifth aspect, the processing module is configured to adjust, based on the phase information, frequency domain information corresponding to the data signal; the processing module is configured to adjust, based on the phase information, time domain information corresponding to the data signal; or the processing module is configured to adjust clock information based on the phase information, where the clock information is used to transmit the data signal.

With reference to the fifth aspect, in some implementations of the fifth aspect, the transceiver module is configured to receive the phase information from the first apparatus through a first interface, where the first interface is any one of the following interfaces: a common public radio interface CPRI or an enhanced common public radio interface eCPRI.

The implementations of the fifth aspect are apparatuses of the second apparatus corresponding to the implementations of the first aspect. For beneficial technical effects of the implementations of the fifth aspect, refer to descriptions of related implementations of the first aspect. Details are not described herein again.

According to a sixth aspect, a communication method is provided. The method may be performed by a first apparatus or a chip in the first apparatus. The method includes: The first apparatus sends phase information to a second apparatus, where the phase information is used to adjust a data signal on a first transmission path, and the first transmission path is a transmission path between the first apparatus and the second apparatus.

According to a seventh aspect, a communication method is provided, where the method may be performed by a second apparatus or a chip in the second apparatus, and the method includes: The second apparatus receives phase information from a first apparatus; and the second apparatus adjusts a data signal on a first transmission path based on the phase information, where the first transmission path is a transmission path between the first apparatus and the second apparatus.

According to an eighth aspect, a communication method is provided, where the method is performed by a first radio frequency apparatus or a chip in the first radio frequency apparatus, and the method includes: The first radio frequency apparatus sends a first signal to a second radio frequency apparatus, where a phase of the first signal sent by the first radio frequency apparatus is a first phase; and the first radio frequency apparatus receives a second signal from the second radio frequency apparatus, where the second signal and the first signal are two signals whose transmission directions are opposite on a first transmission path, a phase of the second signal received by the first radio frequency apparatus is a second phase, and the first phase and the second phase are used to adjust a data signal on the first transmission path.

With reference to the eighth aspect, in some implementations of the eighth aspect, the method further includes: The first radio frequency apparatus sends phase information to the second radio frequency apparatus, where the phase information is determined based on the first signal and the second signal; and the first radio frequency apparatus adjusts the data signal on the first transmission path based on the phase information.

With reference to the eighth aspect, in some implementations of the eighth aspect, the method further includes: The first radio frequency apparatus sends phase information to a baseband apparatus, where the phase information is determined based on the first signal and the second signal, and the phase information is used to adjust the data signal on the first transmission path.

According to a ninth aspect, a communication apparatus is provided, and includes a processor. The processor is coupled to a memory, and may be configured to execute instructions in the memory, to implement the method in any one of the first aspect and the possible implementations of the first aspect. Optionally, the apparatus further includes the memory. Optionally, the apparatus further includes a communication interface, and the processor is coupled to the communication interface.

In an implementation, the apparatus is a first apparatus. When the apparatus is a first apparatus, the communication interface may be a transceiver or an input/output interface.

In another implementation, the apparatus is a chip or a chip system configured in the first apparatus. When the apparatus is a chip configured in the first apparatus, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a tenth aspect, a communication apparatus is provided, and includes a processor. The processor is coupled to a memory, and may be configured to execute instructions in the memory, to implement the method in any one of the second aspect and the possible implementations of the second aspect. Optionally, the apparatus further includes the memory. Optionally, the apparatus further includes a communication interface, and the processor is coupled to the communication interface.

In an implementation, the apparatus is a second apparatus. When the apparatus is a second apparatus, the communication interface may be a transceiver or an input/output interface.

In another implementation, the apparatus is a chip or a chip system configured in the second apparatus. When the apparatus is a chip configured in the second apparatus, the communication interface may be an input/output interface.

Optionally, the transceiver may be a transceiver circuit. Optionally, the input/output interface may be an input/output circuit.

According to an eleventh aspect, this application provides a processor, including: an input circuit, an output circuit, and a processing circuit. The processing circuit is configured to: receive a signal through the input circuit, and transmit a signal through the output circuit, so that the processor performs the methods in the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, this application provides a processing apparatus, including: a communication interface and a processor. The communication interface is coupled to the processor. The communication interface is configured to input and/or output information. The information includes at least one of instructions or data. The processor is configured to execute a computer program, so that the processing apparatus performs the methods in the foregoing aspects.

According to a thirteenth aspect, this application provides a processing apparatus, including: a processor and a memory. The processor is configured to read instructions stored in the memory, receive a signal by using a receiver, and transmit a signal by using a transmitter, so that the processing apparatus performs the methods in the foregoing aspects.

Optionally, there are one or more processors. If there is a memory, there may alternatively be one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that in a related information exchange process, for example, sending indication information may be a process of outputting the indication information from the processor, and receiving the indication information may be a process of inputting the received indication information to the processor. Specifically, the information output by the processor may be output to the transmitter, and the input information received by the processor may be from the receiver. The transmitter and the receiver may be collectively referred to as a transceiver.

The apparatus in the twelfth aspect and the thirteenth aspect may be a chip or a chip system. The processor may be implemented by hardware, or may be implemented by software. When the processor is implemented by hardware, the processor may be a logic circuit, an integrated circuit, or the like. When the processor is implemented by software, the processor may be a general-purpose processor, and may be implemented by reading software code stored in a memory. The memory may be integrated into the processor, or may be located outside the processor and exist independently.

According to a fourteenth aspect, this application provides a computer program product. The computer program product includes a computer program (also referred to as code or instructions). When the computer program is run, a computer is enabled to perform the methods in the foregoing aspects.

According to a fifteenth aspect, this application provides a computer-readable storage medium. The computer-readable storage medium stores a computer program (which may also be referred to as code or instructions). When the computer program runs on a computer, the computer is enabled to perform the methods in the foregoing aspects.

According to a sixteenth aspect, this application provides a system, including the foregoing first apparatus and second apparatus.

### BRIEF DESCRIPTION OF DRAWINGS

FIG. 1 is a schematic diagram of a system to which a method according to an embodiment of this application is applicable;
FIG. 2 is a schematic diagram of function division manners of different interfaces applicable to an embodiment of this application;
FIG. 3 is a schematic diagram of a system to which a plurality of connection manners according to an embodiment of this application are applicable;
FIG. 4 is an illustrative diagram of a phase difference and a fluctuation phase difference according to an embodiment of this application;
FIG. 5 is a schematic flowchart of a communication method according to an embodiment of this application;
FIG. 6 is a schematic flowchart of two methods for obtaining a reference phase difference by a baseband unit according to an embodiment of this application;
FIG. 7 is a schematic flowchart of a method for communication between different radio units according to an embodiment of this application;
FIG. 8 is a schematic flowchart of a method for communication between different baseband units according to an embodiment of this application;
FIG. 9 is an illustrative diagram of signal transmission between a baseband unit and a radio unit; and
FIG. 10 and FIG. 11 are schematic diagrams of structures of possible communication apparatuses according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. Alternatively, the communication system may be a public land mobile network (public land mobile network, PLMN), a device-to-device (device-to-device, D2D) communication system, a machine to machine (machine to machine, M2M) communication system, an internet of things (Internet of things, IoT) communication system, a vehicle to everything (vehicle to everything, V2X) communication system, an unmanned aerial vehicle (unmanned aerial vehicle, UAV) communication system, or another communication system.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

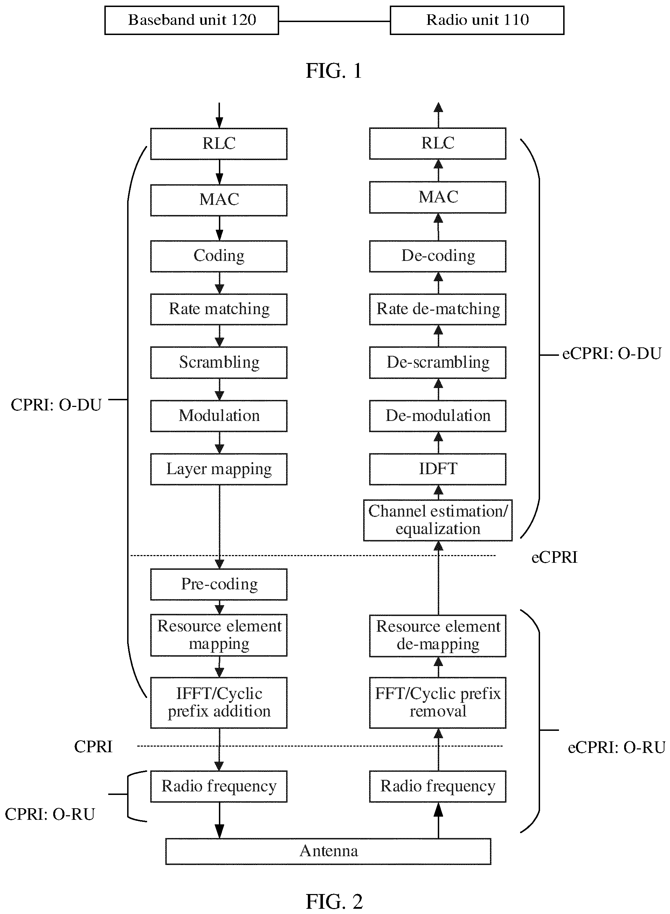

For ease of understanding of embodiments of this application, an application scenario of embodiments of this application is first described in detail with reference to FIG. 1.

FIG. 1 is a schematic diagram of a structure of a communication system to which an embodiment of this application is applicable. First, apparatuses that may be used in the communication system are described.

Radio unit (radio unit, RU) 110: The radio unit 110 may implement functions such as intermediate frequency processing, radio frequency processing, and duplexing of a signal. For example, the radio unit 110 may be a remote radio unit (remote radio unit, RRU), an active antenna unit (active antenna unit, AAU), an open-radio unit (open-radio unit, O-RU) in an open-radio access network (open-radio access network, O-RAN), or another network element or communication apparatus having a capability of processing an intermediate frequency signal, a radio frequency signal, or an intermediate radio frequency signal.

Baseband unit (baseband unit, BU) 120: The baseband unit 120 may implement a function of processing a baseband signal. For example, the baseband unit 120 may be a baseband unit (baseband unit, BBU), a central unit (central unit, CU), a distributed unit (distributed unit, DU), an open-distributed unit (open-distributed unit, O-DU) in an O-RAN, or another network element or communication apparatus having a capability of processing a baseband signal. A module configured to perform baseband processing in the baseband unit 120 may be referred to as a baseband board, and a quantity of baseband boards may be one or more.

A communication interface between the baseband unit 120 and the radio unit 110 may be referred to as a fronthaul interface. For example, the fronthaul interface may be a common public radio interface (common public radio interface, CPRI), an eCPRI interface, or another interface that is defined in the future and that is used to connect the baseband unit 120 and the radio unit 110. This is not particularly limited in this application.

Different interfaces may use different function division manners. The following describes different interfaces by using an example of an O-RAN system to which this embodiment of this application is applicable.

FIG. 2 is a schematic diagram of function division manners of different interfaces applicable to an embodiment of this application.

Refer to FIG. 2. In a division manner in which a CPRI interface is adopted, in a downlink direction, an O-DU may have a function of radio link control (radio link control, RLC), a function of media access control (medium access control, MAC), and functions of coding (coding), rate matching (rate matching), scrambling (scrambling), modulation (modulation), layer mapping (layer mapping), pre-coding (pre-coding), resource element mapping (resource element mapping), inverse fast fourier transform (inverse fast fourier transformation, IFFT), and cyclic prefix addition (cyclic prefix addition). Correspondingly, in an uplink direction, the O-DU may have functions of fast fourier transform (inverse fast transformation, FFT), cyclic prefix removal (cyclic prefix removal), resource element de-mapping (resource element de-mapping), channel estimation (channel estimation)/equalization (equalization), inverse discrete fourier transform (inverse discrete Fourier transform, IDFT), de-modulation (de-modulation), de-scrambling (de-scrambling), rate de-matching (rate de-matching), de-coding (de-coding), and media access control (medium access control, MAC), and a function of radio link control (radio link control, RLC). The O-RU has a corresponding function of radio frequency (radio frequency) in a downlink direction and a downlink direction.

An eCPRI interface may use a plurality of baseband processing division manners. Baseband division may be symmetric in an uplink direction and a downlink direction, or may be asymmetric in an uplink direction and a downlink direction. FIG. 2 shows one of the manners. This is not particularly limited in this application. In the division manner used by the eCPRI interface shown in FIG. 2, in a downlink direction, the O-DU may have a function of radio link control (radio link control, RLC), a function of media access control (medium access control, MAC), and functions of coding (coding), rate matching (rate matching), scrambling (scrambling), modulation (modulation), and layer mapping (layer mapping). In an uplink direction, the O-DU may have functions of channel estimation (channel estimation)/equalization (equalization), inverse discrete fourier transform (inverse discrete Fourier transform, IDFT), de-modulation (de-modulation), de-scrambling (de-scrambling), rate de-matching (rate de-matching), de-coding (de-coding), and media access control (medium access control, MAC), and a function of radio link control (radio link control, RLC). In a downlink direction, the O-RU has functions of pre-coding (pre-coding), resource element mapping (resource element mapping), inverse fast fourier transform (inverse fast fourier transformation, IFFT), and cyclic prefix addition (cyclic prefix addition), and a function of radio frequency (radio frequency). In an uplink direction, the O-RU has functions of radio frequency (radio frequency), fast fourier transform (inverse fast transformation, FFT), cyclic prefix removal (cyclic prefix removal), and resource element de-mapping (resource element de-mapping).

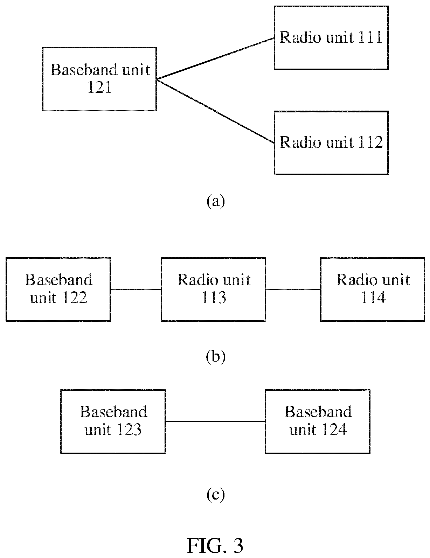

FIG. 3 is a schematic diagram of a system to which a plurality of connection manners according to an embodiment of this application are applicable. The system may be a system that includes a plurality of radio units in a direct connection manner. For example, refer to (a) in FIG. 3. A baseband unit 121 is directly connected to a radio unit 111 and a radio unit 112 separately, and the baseband unit 111 directly communicates with the radio unit 112 through an interface (for example, an ecpri interface). The system may also be a system that includes a plurality of radio units in a cascading connection manner. For example, refer to (b) in FIG. 3. A baseband unit 122 is directly connected to a radio unit 113, the radio unit 113 is directly connected to a radio unit 114, the baseband unit 122 may directly communicate with the radio unit 113, and the baseband unit 122 and the radio unit 114 communicate with each other by using the radio unit 113. The system may also be a system that includes a plurality of baseband units. For example, refer to (c) in FIG. 3. A baseband unit 123 and a baseband unit 124 are directly connected. The system may further include at least one radio unit (not shown in the figure), and the radio unit may be connected with reference to the foregoing direct connection manner, or may be connected with reference to the foregoing cascading connection manner.

It should be understood that the foregoing describes only several connection manners applicable to embodiments of this application. There may be another connection manner in which the radio unit and the baseband unit can communicate with each other and that is applicable to embodiments of this application. This is not particularly limited in this application.

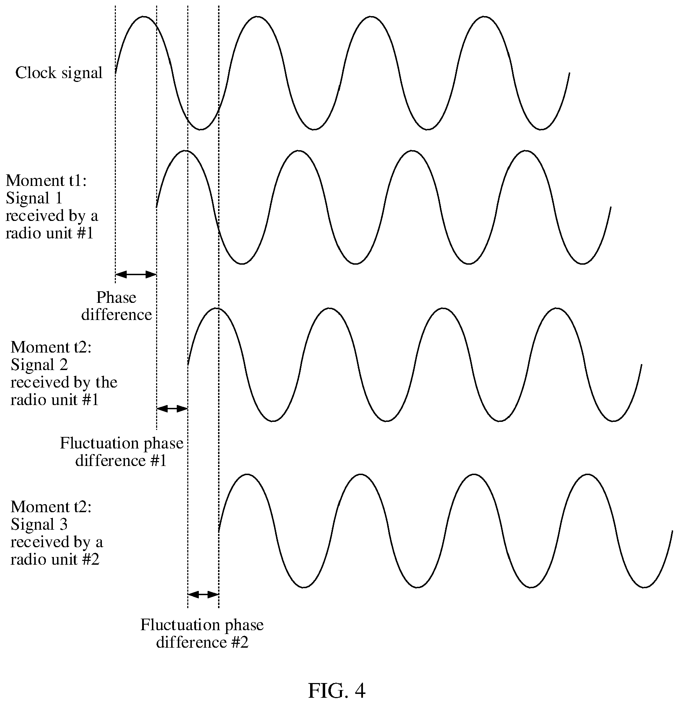

An environment on a transmission path between two network devices, for example, the baseband unit 120 and the radio unit 110 shown in FIG. 1, may affect a phase of a data signal. For ease of understanding embodiments of this application, the following describes a phase difference and a phase fluctuation with reference to FIG. 4.

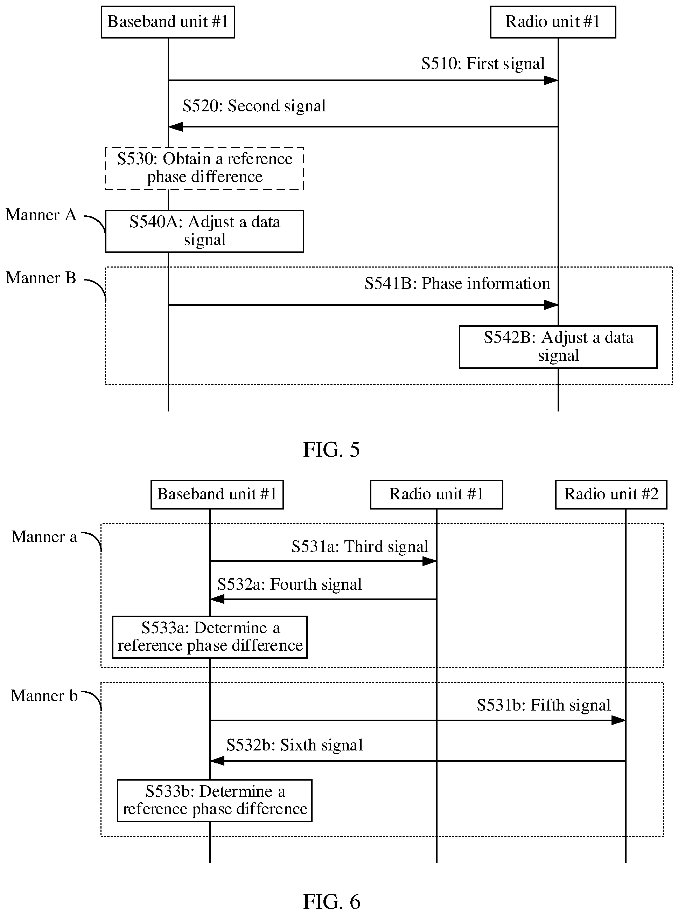

FIG. 4 is an illustrative diagram of a phase difference and a fluctuation phase difference. Refer to FIG. 4. An example in which a baseband unit sends a signal based on a clock signal (for example, a 122.88 MHz clock) is used. A radio unit #1 receives a signal 1 from the baseband unit at a moment t1. It can be seen that a phase difference (where the phase difference may also be referred to as a phase drift) shown in the figure is generated between the signal 1 and the clock signal after transmission. The phase difference may cause a receiving end of the signal 1 to fail to correctly parse the signal 1. In addition, as time goes by, an environment on a transmission path between the baseband unit and the radio unit #1 may also change. For example, temperature, humidity, or the like changes on a transmission path between the moment t1 and a moment t2. The radio unit #1 receives a signal 2 from the baseband unit at the moment t2, and the signal 2 is still sent by the baseband unit based on the clock signal. However, refer to FIG. 4. A phase difference also exists between the signal 2 and the signal 1 received by the radio unit #1, and the phase difference may be referred to as a fluctuation phase difference #1, namely, a phase difference generated by phase fluctuation. The fluctuation phase difference affects stability of a data signal transmitted between the baseband unit and the radio unit #1, and further affects reliability of data signal transmission. When the baseband unit is connected to a plurality of radio units, for example, in the direct connection manner and the cascading connection manner shown in FIG. 3, the plurality of radio units may cooperate with each other. However, because transmission paths between the baseband unit and the different radio units are different, impact of the different transmission paths on a phase of a data signal may also be different. For example, refer to FIG. 4. There is also a phase difference between the signal 2 received by the radio unit #1 from the baseband unit at the moment t2 and a signal 3 received by a radio unit #2 from the baseband unit at the moment t2. The phase difference may be referred to as a fluctuation phase difference #2, and the fluctuation phase difference #2 may affect collaboration between the radio unit #1 and the radio unit #2. This reduces reliability of data transmission. Therefore, embodiments of this application provide a communication method, a communication apparatus, and a communication system, to improve reliability of data transmission. The following first describes the communication method with reference to FIG. 5 to FIG. 10.

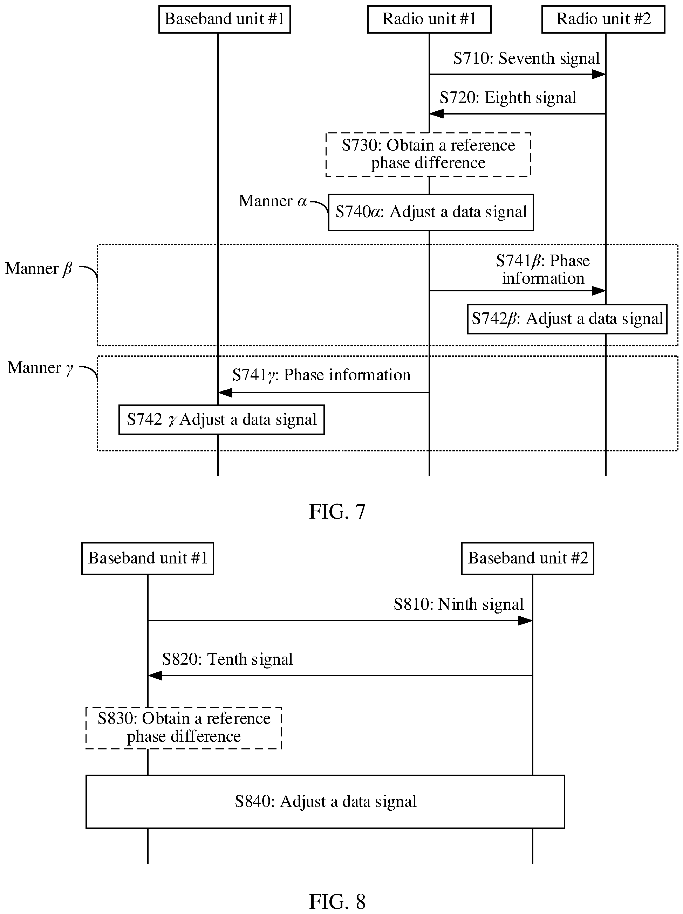

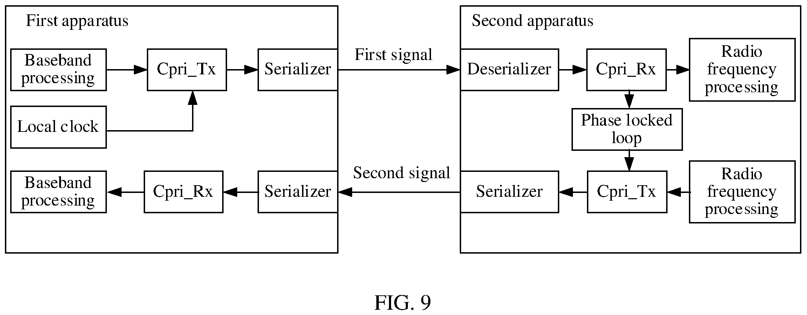

Methods shown in FIG. 5 to FIG. 6 may be applied to a first apparatus and a second apparatus. In FIG. 5 and FIG. 6, an example in which a baseband unit #1 is used as the first apparatus and a radio unit #1 is used as the second apparatus is used for description. A method shown in FIG. 7 may be applied to different radio frequency apparatuses. In FIG. 8, a radio unit #1 and a radio unit #2 are used as an example for description. A method shown in FIG. 8 may be applied to different control apparatuses. In FIG. 9, a baseband unit #1 and a baseband unit #2 are used as an example for description.

FIG. 5 is a schematic flowchart of a communication method according to an embodiment of this application.

A method shown in FIG. 5 may be applied to a first apparatus and a second apparatus. The following uses an example in which the first apparatus is a baseband unit #1 and the second apparatus is a radio unit #1 for description. Details are not described below. The baseband unit #1 and the radio unit #1 may be directly connected, for example, the baseband unit 121 and the radio unit 111 shown in (a) in FIG. 3, and the baseband unit 122 and the radio unit 113 shown in (b) in FIG. 3. Alternatively, the baseband unit #1 and the radio unit #1 may communicate with each other by using another network apparatus, for example, the baseband unit 122 and the radio unit 114 shown in (b) in FIG. 3. Alternatively, the baseband unit #1 and the radio unit may use another connection manner in which the baseband unit #1 and the radio unit can communicate with each other. This is not particularly limited in this application.

S510: The baseband unit #1 sends a first signal to the radio unit #1, and correspondingly, the radio unit #1 receives the first signal from the baseband unit #1.

A phase of the first signal sent by the baseband unit #1 is a first phase.

The baseband unit #1 may send the first signal to the radio unit #1 through a first interface, where the first interface may be a cpri interface, an ecpri interface, or another interface that is defined in the future and used for communication between a baseband unit and a radio unit.

The phase of the first signal sent by the baseband unit #1 may be determined based on a phase of a clock. For example, the first signal may be a signal obtained through clock modulation, a signal sent by the clock, or a signal carrying clock information.

For example, the baseband unit #1 may send the first signal based on a local clock source (for example, a 122.88 MHz system clock). In this case, a frequency of the first signal is 122.88 MHz, and the first phase is an initial phase carried by the clock source.

It should be noted that, the first signal may be any signal received or sent between the baseband unit and the radio unit. After receiving the first signal, the radio unit may obtain, through clock data recovery (clock data recovery, CDR), the phase of the received first signal. It may be understood that, in a case in which the baseband unit and the radio unit process a data service, the first signal may be a data service signal that can be transmitted between the baseband unit and the radio unit, and in a case in which the baseband unit and the radio unit do not process the data service, the first signal may be a signal used for a communication negotiation between the baseband unit and the radio unit. In other words, in this embodiment, the phase may be measured by using the signal transmitted between the baseband unit and the radio unit, and dedicated transmission resources do not need to be allocated to the first signal for phase measurement, so that frequent signal measurement can be supported, impact on service data transmission can be reduced, and consumption of transmission resources can be saved.

S520: The radio unit #1 sends a second signal to the baseband unit #1 based on the first signal, and correspondingly, the baseband unit #1 receives the second signal from the radio unit #1.

The second signal and the first signal are two signals whose transmission directions are opposite on a first transmission path, and a phase of the second signal received by the baseband unit #1 is a second phase.

It should be noted that the first transmission path is a transmission path between the radio unit #1 and the baseband unit #1, for example, an optical fiber transmission path between the radio unit #1 and the baseband unit #1. In addition, the first transmission path may be a transmission path (for example, an optical fiber that supports bidirectional signal transmission) that supports bidirectional signal transmission. Alternatively, the first transmission path is two unidirectional physical transmission paths that are in roughly same environments (for example, two unidirectional transmission optical fibers in same environments). To be specific, although the first signal and the second signal are transmitted on two different physical transmission paths, transmission environments of the two physical transmission paths are similar, for example, a transmission distance, temperature, and humidity on the transmission paths are similar. Therefore, it may be considered that impact of transmission on the first transmission path on the phase of the first signal is approximately the same as that on the phase of the second signal.

It should be further noted that a moment at which the baseband unit #1 sends the first signal is closely connected to a moment at which the radio unit #1 sends the second signal, that is, a time interval is short. In other words, within the time interval, a transmission environment of the first transmission path does not greatly affect the phase of the signal. Therefore, when it is determined that the phase of the signal transmitted on the first transmission path varies, it may be considered that a phase variation experienced when the baseband unit #1 sends the first signal is approximately the same as a phase variation experienced when the radio unit #1 sends the second signal. For example, if the baseband unit #1 sends the first signal, and the phase of the first signal is lagged by 1 degree in a process of transmitting the first signal on the first transmission path, it may also be considered that the phase of the second signal is lagged by 1 degree in a process of transmitting the second signal on the first transmission path.

It may be understood that, in this embodiment of this application, a phase difference, a phase drift, or a phase variation represents a phase amplitude change in a direction, for example, a lagging amplitude or a leading amplitude. Details are not described below again.

The radio unit #1 may generate the second signal based on the first signal by using a light propagation mirror, and return the second signal to the baseband unit #1.

In a possible implementation, the radio unit #1 may perform phase-locked processing on the first signal to generate the second signal. The phase-locked processing may be understood as performing specific circuit processing on the first signal, so that the phase of the first signal remains constant. For example, the radio unit #1 may include a phase locked loop (phase locked loop, PLL) module, and a phase difference between the first signal input to the PLL module and the second signal output from the PLL module remains constant.

In a possible implementation, the second signal may be any signal received or sent between the baseband unit and the radio unit. After receiving the second signal, the baseband unit may obtain, through the CDR, the phase of the received second signal. In addition, it may be understood that the first signal and the second signal may be signals that carry different data. For example, after recovering a clock of the first signal through the CDR, the clock may be added to another uplink signal, namely, the second signal. Therefore, the method in this embodiment of this application can reduce impact on service data transmission.

The baseband unit #1 may determine a phase difference based on the first phase of the sent first signal and the second phase of the received second signal. The baseband unit #1 may determine the phase difference in a plurality of manners. A manner in which the baseband unit #1 determines the phase difference is not limited in this application. The following describes a possible determining manner as an example.

For example, the baseband unit #1 separately performs modulation processing on a first clock carried by the first signal and a second clock carried by the second signal, to obtain a measurement phase difference by using a phase difference obtained by comparing a signal modulated by the first clock and a signal modulated by the second clock. The modulation processing may mean that the clock and a signal for modulation are multiplied by frequency points one by one to generate a new signal. For example, the baseband unit #1 multiplies, by frequency points one by one, the first clock used to send the first signal and the signal for modulation, to obtain the signal modulated by the first clock. Correspondingly, the baseband unit #1 recovers the second signal to obtain the second clock, and multiplies the second clock and the signal for modulation by frequency points one by one, to obtain the signal modulated by the second clock. The baseband unit #1 determines the phase difference between the first signal and the second signal by comparing the phase difference between the two modulated signals.

For another example, the baseband unit #1 separately performs frequency multiplication processing on the first clock carried by the first signal and the second clock carried by the second signal, to obtain the measurement phase difference by using a delay obtained by comparing a clock obtained through frequency multiplication on the first clock and a clock obtained through frequency multiplication on the second clock. The frequency multiplication processing means that a high-frequency clock is obtained through performing frequency multiplication on the clock, so that the phase difference may be represented by using a delay difference.

For another example, the baseband unit #1 separately converts, through circuit processing, the first clock carried by the first signal and the second clock carried by the second signal into voltages, and determines the measurement phase difference based on a voltage difference obtained by comparing the voltages. The circuit processing may mean that the clock is used as an input of a specific circuit, and an output voltage of the specific circuit may represent a phase of the clock. For example, the baseband unit #1 uses the first clock as an input signal of the circuit, and measures a voltage amplitude of an output voltage. Correspondingly, the baseband unit #1 also uses the second clock as an input signal of the circuit, and measures a voltage amplitude corresponding to an output voltage. The baseband unit #1 determines the phase difference between the first signal and the second signal by comparing the two voltage amplitudes.

It may be understood that the phase difference between the first phase of the first signal sent by the baseband unit #1 and the second phase of the second signal received by the baseband unit #1 is caused by two times of transmission on the first transmission path. Therefore, the baseband unit #1 may process the phase difference determined in the foregoing manner, to obtain the measurement phase difference caused by one time of transmission on the first transmission path. For example, the baseband unit #1 may divide the difference between the first phase and the second phase by 2 as the measurement phase difference. For example, if the baseband unit #1 determines that the second signal is lagged by 8 degrees compared with the phase of the first signal, the baseband unit #1 may determine that the measurement phase difference is lagged by 4 degrees.

In a possible implementation, the measurement phase difference may be used to adjust a data signal on the first transmission path. To be specific, the baseband unit #1 or the radio unit #1 may perform phase compensation on the data signal on the first transmission path based on the measurement phase difference, so that the data signal that is transmitted between the baseband unit #1 and the radio unit #1 and that is affected by the first transmission path is compensated, to improve reliability of data signal transmission.

In another possible implementation, the measurement phase difference may not affect parsing of the data signal. For example, a receiving end of the data signal pre-configures or is indicated with a reference phase difference, and parses the data signal based on the reference phase difference. If a difference between the measurement phase difference and the reference phase difference is less than a specific threshold, the baseband unit #1 or the radio unit #1 may no longer perform phase compensation on the data signal on the first transmission path based on the measurement phase difference. If the difference between the measurement phase difference and the reference phase difference is greater than or equal to the specific threshold, the baseband unit #1 may perform phase compensation on the data signal on the first transmission path based on the difference between the reference phase difference and the measurement phase difference. When the reference phase difference is a reference phase difference on the first transmission path, the difference between the measurement phase difference and the reference phase difference may be caused by an environment change on the first transmission path, for example, the fluctuation phase difference #1 shown in FIG. 4. When the reference phase difference is another transmission path (for example, a second transmission path between the baseband unit #1 and a radio unit #2), the difference between the measurement phase difference and the reference phase difference may be affected by an environment difference between the first transmission path and the second transmission path, for example, the fluctuation phase difference #2 shown in FIG. 4.

Therefore, because a transmission distance of the transmission path usually does not change, and another environmental factor such as temperature usually change slowly, impact of the transmission path on a phase of the data signal may be considered unchanged or slightly changed in a period of time. Therefore, after obtaining the measurement phase difference through measurement, the baseband unit #1 may compare the measurement phase difference with the reference phase difference, and adjust the data signal on the first transmission path based on a fluctuation phase difference between the measurement phase difference and the reference phase difference. Therefore, while reliability of data signal transmission is improved, a quantity of times or a degree of compensation performed on the data signal can be reduced, to improve efficiency of data signal transmission. The following describes manners of obtaining the reference phase difference in step S530.

Optionally, in S530, the baseband unit #1 obtains the reference phase difference.

The reference phase difference is a reference phase difference for signal transmission on the first transmission path, or the reference phase difference is a reference phase difference on the second transmission path, and the first transmission path and the second transmission path are different transmission paths. For ease of understanding step S530, the following describes two manners in which the baseband unit #1 obtains the reference phase difference with reference to FIG. 6. Manner a is used to obtain the reference phase difference for signal transmission on the first transmission path, and Manner b is used to obtain the reference phase difference for signal transmission on the second transmission path.

### Manner a:

S531a: The baseband unit #1 sends a third signal to the radio unit #1, and correspondingly, the radio unit #1 receives the third signal from the baseband unit #1.

It should be noted that a moment at which the baseband unit #1 sends the third signal to the radio unit #1 is earlier than the moment at which the baseband unit #1 sends the first signal to the radio unit #1.

A phase of the third signal sent by the baseband unit #1 is a third phase. A manner of sending the third signal by the baseband unit #1 to the radio unit #1 is similar to the manner of sending the first signal in step S510. Details are not described herein again.

S532a: The radio unit #1 sends a fourth signal to the baseband unit #1 based on the third signal, and correspondingly, the baseband unit #1 receives the fourth signal from the radio unit #1.

A phase of the fourth signal received by the baseband unit #1 is a fourth phase. A manner of sending the fourth signal by the radio unit #1 to the baseband unit #1 is similar to the manner of sending the second signal in step S520. Details are not described herein again.

S533a: The baseband unit #1 determines the reference phase difference based on the third phase and the fourth phase.

A manner in which the baseband unit #1 determines the reference phase difference based on the third phase and the fourth phase is similar to a manner in which the baseband unit #1 determines the measurement phase difference based on the first phase and the second phase described in step S520. For example, the reference phase difference is half of a difference between the third phase and the fourth phase. Details are not described herein again.

Therefore, the reference phase difference may be used as a reference phase difference on the first transmission path.

For example, the baseband unit #1 may periodically send a plurality of signals to the radio unit #1, and receive signals respectively corresponding to the plurality of signals from the radio unit #1. The third signal may be the 1^{st} signal in the plurality of signals. To be specific, the baseband unit #1 may use a measurement phase difference obtained through initial measurement as the reference phase difference, and compare a measurement phase difference obtained through subsequent measurement with the reference phase difference to obtain the fluctuation phase difference. The fluctuation phase difference is used to adjust the data signal on the first transmission path.

For example, a phase of a signal initially sent by the baseband unit #1 is an initial phase phase_0 carried by a clock source, and a phase that is received by the baseband unit #1 and that is based on the signal is phase_r_0. Because a phase difference phase_r_0-phase_0 is obtained during bidirectional transmission on the first transmission path, a phase variation during unidirectional transmission on the first transmission path is delta_phase_0=(phase_r_0-phase_0)/2, and the variation may be set to the reference phase difference. The baseband unit #1 may subsequently send and receive a signal to and from the radio unit #1 based on a preset cycle to obtain a measurement phase difference, and obtain a fluctuation phase difference based on the measurement phase difference and the reference phase difference, so that the baseband unit #1 or the radio unit #1 may adjust the data signal on the first transmission path based on the fluctuation phase difference. For example, if a phase of a signal sent by the baseband unit #1 at an i^{th} time is phase_0, and a phase of the signal received by the baseband unit #1 is phase_r_i, the measurement phase difference is (phase_r_i-phase_0)/2, and the fluctuation phase difference is (phase_r_i-phase_0)/2-(phase_)r_0-phase_0)/2.

Therefore, in Manner a, the reference phase difference is a reference phase difference on the first transmission path, and phase compensation is performed by using the fluctuation phase difference obtained based on the reference phase difference, so that impact of the first transmission path on the phase of the data signal can be maintained at a constant level, and reliability of data signal transmission on the first transmission path can be improved.

### Manner b:

S531b: The baseband unit #1 sends a fifth signal to the radio unit #2, and correspondingly, the radio unit #2 receives the fifth signal from the baseband unit #1.

A phase of the fifth signal sent by the baseband unit #1 is a fifth phase, and a manner of sending the fifth signal by the baseband unit #1 to the radio unit #2 is similar to the manner of sending the second signal in step S510. Details are not described herein again.

In a possible implementation, a moment at which the baseband unit #1 sends the fifth signal to the radio unit #2 is the same as the moment at which the baseband unit #1 sends the first signal to the radio unit #1, or an interval between the moment at which the baseband unit #1 sends the fifth signal to the radio unit #1 and the moment at which the baseband unit #1 sends the first signal to the radio unit #1 is less than or equal to a specific threshold. Therefore, a measurement phase difference and a reference phase difference are obtained by the baseband unit #1 synchronously receiving and sending signals from and to different radio units, so that reliability of cooperative work of a plurality of radio units can be improved.

S532b: The radio unit #2 sends a sixth signal to the baseband unit #1 based on the fifth signal, and correspondingly, the baseband unit #1 receives the sixth signal from the radio unit #2.

A phase of the sixth signal received by the baseband unit #1 is a sixth phase. A manner of sending the sixth signal by the radio unit #2 to the baseband unit #1 is similar to the manner of sending the second signal in step S520. Details are not described herein again.

S533b: The baseband unit #1 determines a reference phase difference based on the fifth phase and the sixth phase.

A manner in which the baseband unit #1 determines the reference phase difference based on the fifth phase and the sixth phase is similar to the manner in which the baseband unit #1 determines the measurement phase difference based on the first phase and the second phase described in step S520. For example, the reference phase difference is half of a difference between the fifth phase and the sixth phase. Details are not described herein again.

Therefore, in Manner b, the reference phase difference may be used as a reference phase difference on the second transmission path, and phase compensation is performed on the data signal on the first transmission path based on a fluctuation phase difference obtained by using the reference phase difference, so that impact of the two transmission paths on the phase of the data signal can be consistent, and reliability of collaboration between a plurality of radio units can be improved.

The foregoing describes the two manners of determining the reference phase difference. In this embodiment of this application, the reference phase difference may alternatively be a phase difference that is on the first transmission path or another transmission path and that is pre-configured, generated based on a clock source of the baseband unit #1, or obtained through measurement in another manner. This is not particularly limited in this application.

In this embodiment of this application, the phase compensation for the data signal on the first transmission path may be performed by the baseband unit #1, or may be performed by the radio unit #1. The following describes a manner in which the baseband unit #1 or the radio unit #1 adjusts the data signal. Manner A is a manner in which the baseband unit #1 adjusts the data signal, and Manner B is a manner in which the radio unit #1 adjusts the data signal.

It should be noted that, in some scenarios, based on different design division of work of the radio unit #1 and the baseband unit #1, for example, in the ecpri transmission protocol, some baseband processing may be performed by the radio unit #1, or may be performed by the baseband unit #1. The phase compensation for the data signal on the first transmission path may also be performed by the baseband unit #1 and the radio unit #1 together. A manner of joint compensation may be similar to that in the following Manner A and Manner B. This is not described herein again.

### Manner A:

S540A: The baseband unit #1 adjusts the data signal on the first transmission path.

It may be understood that the data signal on the first transmission path includes the data signal sent by the baseband unit #1 to the radio unit #1 and the data signal sent by the radio unit #1 to the baseband unit #1.

In a possible implementation, the baseband unit #1 may adjust the data signal on the first transmission path based on the measurement phase difference.

In another possible implementation, the baseband unit #1 may adjust the data signal on the first transmission path based on the foregoing fluctuation phase difference.

The following uniformly describes a manner in which the baseband unit #1 adjusts the data signal based on the phase difference (the measurement phase difference or the fluctuation phase difference).

### Manner 1:

The baseband unit #1 adjusts, based on the phase difference, frequency domain information corresponding to the data signal.

For example, the baseband unit #1 may convert the phase difference into at least one frequency, to be specific, determine a phase variation of each frequency point on the at least one frequency point, and superimpose the phase variation corresponding to the frequency point on each frequency point. The at least one frequency point may be any frequency point set by a system. For example, the at least one frequency point may be a frequency point established by the radio unit #1. This is not particularly limited in this application.

The baseband unit #1 may perform conversion based on a proportional relationship between a frequency (namely, a measured frequency of the first signal and the second signal) corresponding to the phase difference and a frequency corresponding to each frequency point. For example, a phase difference phase_{122.88MHz} of a 122.88 MHz frequency is converted into a frequency point of a 4.9 GHz frequency to obtain a phase difference: phase_{4.9GHz}=(4.9G/122.88MHz) phase_{122.88MHz}.

In a possible implementation, if a difference between converted phase differences between two adjacent frequency points is less than a specific threshold, the baseband unit #1 may compensate for a same phase difference on the two frequency points. The same phase difference may be one of the two converted phase differences. Therefore, a compensation operation amount can be reduced, and efficiency of adjusting the data signal can be improved.

### Manner 2:

The baseband unit #1 adjusts, based on the phase difference, time domain information corresponding to the data signal.

For example, the baseband unit #1 may superimpose a corresponding phase difference on each of at least one collection point. The at least one collection point may be any collection point set by the system. This is not particularly limited in this application.

### Manner 3:

The baseband unit #1 adjusts clock information based on the phase difference, where the clock information is used to transmit the data signal.

For example, the baseband unit may adjust a phase carried by a local clock source, so that the phase of the data signal sent based on the local clock source is compensated.

Therefore, in Manner A, the baseband unit #1 may perform phase compensation on the data signal on the first transmission path based on the measurement phase difference or the fluctuation phase difference.

### Manner B:

S541B: The baseband unit #1 sends phase information to the radio unit #1, and correspondingly, the radio unit #1 receives the phase information from the baseband unit #1.

The phase information indicates the measurement phase difference or the fluctuation phase difference.

In a possible implementation, the phase information further indicates the radio unit #1 to adjust the data signal on the first transmission path.

For example, the phase information may explicitly indicate the measurement phase difference or the fluctuation phase difference used to adjust the data signal. For example, the phase information may include a value of the measurement phase difference or the fluctuation phase difference. Alternatively, the phase information may indirectly indicate or implicitly indicate the measurement phase difference or the fluctuation phase difference used to adjust the data signal. For example, the phase information includes values of the first phase and the second phase, so that the radio unit #1 may determine the measurement phase difference based on the first phase and the second phase. For another example, the phase information includes the first phase, the second phase, and the reference phase difference, so that the radio unit #1 may determine the fluctuation phase difference based on the first phase, the second phase, and the reference phase difference. It may be understood that, when the radio unit #1 pre-configures some phase values, for example, if the radio unit #1 pre-configures the first phase, the phase information may not include the first phase. For another example, if the radio unit #1 pre-configures the reference phase difference, the phase information may not include the reference phase difference, so that transmission resources can be saved.

In a possible implementation, the baseband unit #1#1 may process the measurement phase difference or the fluctuation phase difference, and then send a processed measurement phase difference or a processed fluctuation phase difference to the radio unit #1. For example, if the radio unit #1 may adjust the frequency domain information of the data signal in Manner 1, the baseband unit #1 may convert the measurement phase difference or the fluctuation phase difference into at least one frequency point, to generate information corresponding to each frequency point. The phase information includes information corresponding to the at least one frequency point, the information corresponding to each of the at least one frequency point indicates a phase compensation amount on the frequency point. Therefore, processing complexity of performing phase compensation by the radio unit #1 can be reduced.

In a possible implementation, the baseband unit #1 may send the phase information in a time stamp manner. In other words, the phase information may indicate the measurement phase difference or the fluctuation phase difference by using the time stamp. An example in which the phase information includes a value of the fluctuation phase difference is used for description. Different time locations in a time unit are set to represent different phase values. For example, a length of a time unit is set to 10 ms, a time mark at a location of 1 ms in the time unit indicates that the phase difference is 5 degrees, a time mark at a location of 2 ms in the time unit indicates that the phase difference is 10 degrees, and so on. The time mark may be one defined bit or specific data. This is not particularly limited in this application. Therefore, the baseband unit #1 transmits the phase information in the time stamp manner, so that transmission resources can be saved.

S542B: The radio unit #1 adjusts the data signal on the first transmission path based on the phase information.

The radio unit #1 may adjust the data signal on the first transmission path based on the measurement phase difference or the fluctuation phase difference. A manner in which the radio unit #1 adjusts the data signal is similar to the manner in which the baseband unit #1 adjusts the data signal in step S540A. Details are not described herein again.

Based on the technical solution shown in FIG. 5, the phase of the first signal sent by the baseband unit #1 on the first transmission path is the first phase, and the phase of the second signal received on the first transmission path is the second phase. Because the second signal is generated by the radio unit #1 based on the first signal, and the phase difference between the first phase and the second phase carries impact of two-time and bidirectional transmission on the phase on the first transmission path, the first phase and the second phase may be used to adjust the data signal on the first transmission path, and reliability of data signal transmission on the first transmission path can be improved.

It may be understood that, in the technical solution shown in FIG. 5, the baseband unit #1 initiates phase measurement between the baseband unit #1 and the radio unit #1, to obtain the first phase of the sent first signal and the second phase of the received second signal. In a possible implementation, the phase measurement may be initiated by the radio unit #1. To be specific, the radio unit #1 sends the first signal to the baseband unit #1, the baseband unit #1 sends the second signal to the radio unit #1 based on the first signal, and the radio unit #1 obtains the first phase of the sent first signal and the second phase of the received second signal. The first phase and the second phase may be used by the baseband unit #1 or the radio unit #1 to perform phase compensation on the data signal on the first transmission path. This implementation is similar to the implementation described in FIG. 5. Details are not described herein again.

The foregoing describes adjustment of the data signal on the first transmission path between the baseband unit #1 and the radio unit #1. In a possible implementation, a phase difference and a phase fluctuation may also be generated for a data signal on a third transmission path between the radio unit #1 and the radio unit #2. The following describes a manner of adjusting the data signal between different radio units with reference to FIG. 7.

FIG. 7 is a schematic flowchart of a method for communication between different radio units according to an embodiment of this application.

S710: A radio unit #1 sends a seventh signal to a radio unit #2, and correspondingly, the radio unit #2 receives the seventh signal from the radio unit #1.

The radio unit #1 and the radio unit #2 may communicate with each other in the cascading connection manner shown in FIG. 3, and a transmission path between the radio unit #1 and the radio unit #2 may be referred to as a third transmission path.

A phase of the seventh signal sent by the radio unit #1 is a seventh phase.

A manner of sending the seventh signal by the radio unit #1 to the radio unit #2 is similar to the manner of sending the first signal by the baseband unit #1 to the radio unit #1 in step S510 in FIG. 5. Details are not described herein again.

S720: The radio unit #2 sends an eighth signal to the radio unit #1 based on the seventh signal, and correspondingly, the radio unit #1 receives the eighth signal from the radio unit #2.

A phase of the eighth signal received by a baseband unit #1 is an eighth phase. A manner of sending the eighth signal by the radio unit #2 to the radio unit #1 is similar to the manner of sending the second signal by the radio unit #1 to the baseband unit #1 in step S520 in FIG. 5. Details are not described herein again.

Optionally, in S730, the radio unit #1 obtains a reference phase difference.

A manner in which the radio unit #1 obtains the reference phase difference is similar to the manner in which the baseband unit #1 obtains the reference phase difference in step S530 in FIG. 5 and the manner in which the baseband unit #1 obtains the reference phase difference in FIG. 6. Details are not described herein again.

The seventh phase and the eighth phase may be used to adjust a data signal on the third transmission path. For example, a measurement phase difference between the seventh phase and the eighth phase may be used to perform phase compensation on the data signal on the third transmission path. For another example, a fluctuation phase difference may be generated based on the seventh phase, the eighth phase, and the reference phase difference, and the fluctuation phase difference may be used to perform phase compensation on the data signal on the third transmission path. Adjusting the data signal on the third transmission path may be performed by the radio unit #1, the radio unit #2, or the baseband unit #1. The baseband unit #1 is a baseband unit that can communicate with the radio unit #1 and the radio unit #2. The following describes the three manners by using examples.

### Method α:

S740α: The radio unit #1 adjusts the data signal on the third transmission path based on the seventh phase and the eighth phase.

A manner of adjusting the data signal by the radio unit #1 is similar to the manner of adjusting the data signal in step S540A in FIG. 5. Details are not described herein again.

### Method β:

S741β: The radio unit #1 sends phase information to the radio unit #2, and correspondingly, the radio unit #2 receives the phase information from the radio unit #1.

The phase information indicates the measurement phase difference between the seventh phase and the eighth phase or the fluctuation phase difference based on the seventh phase, the eighth phase, and the reference phase difference. A manner in which the radio unit #1 sends the phase information to the radio unit #2 is similar to the manner in which the baseband unit #1 sends the phase information to the radio unit #1 in step S541B in FIG. 5. Details are not described herein again.

S742β: The radio unit #2 adjusts the data signal on the third transmission path based on fluctuation information.

A manner of adjusting the data signal by the radio unit #2 is similar to the manner of adjusting the data signal in step S540A in FIG. 5. Details are not described herein again.

### Method γ:

S741γ: The radio unit #1 sends phase information to the baseband unit #1, and correspondingly, the baseband unit #1 receives the phase information from the radio unit #1.

The phase information indicates the measurement phase difference between the seventh phase and the eighth phase or the fluctuation phase difference based on the seventh phase, the eighth phase, and the reference phase difference. A manner in which the radio unit #1 sends the phase information to the baseband unit #1 is similar to the manner in which the baseband unit #1 sends the phase information to the radio unit #1 in step S541B in FIG. 5. Details are not described herein again.

S742y: The baseband unit #1 adjusts the data signal on the third transmission path based on fluctuation information.

A manner of adjusting the data signal by the baseband unit #1 is similar to the manner of adjusting the data signal in step S540A in FIG. 5. Details are not described herein again.

Based on the technical solution shown in FIG. 7, the phase of the seventh signal sent by the radio unit #1 on the third transmission path is the seventh phase, and the phase of the eighth signal received on the third transmission path is the eighth phase. Because the eighth signal is generated by the radio unit #2 based on the seventh signal, and a phase difference between the seventh phase and the eighth phase carries impact of two-time and bidirectional transmission on a phase on the third transmission path, the seventh phase and the eighth phase may be used to adjust the data signal on the third transmission path, and reliability of data signal transmission on the third transmission path can be improved.

In a possible implementation, a plurality of baseband units may cooperate with each other, and a phase difference and a phase fluctuation may also be generated for a data signal on a fourth transmission path between a baseband unit #1 and a baseband unit #2. The following describes a manner of adjusting the data signal between different baseband units with reference to FIG. 8.

FIG. 8 is a schematic flowchart of a method for communication between different baseband units according to an embodiment of this application.

S810: A baseband unit #1 sends a ninth signal to a baseband unit #2, and correspondingly, the baseband unit #2 receives the ninth signal from the baseband unit #1.

The baseband unit #1 and the baseband unit #2 may communicate with each other in the connection manner shown in FIG. 3. A transmission path between the baseband unit #1 and the baseband unit #2 may be referred to as a fourth transmission path.

A phase of the ninth signal sent by the baseband unit #1 is a ninth phase.

A manner of sending the ninth signal by the baseband unit #1 to the baseband unit #2 is similar to the manner of sending the first signal by the baseband unit #1 to the baseband unit #1 in step S510 in FIG. 5. Details are not described herein again.

S820: The baseband unit #2 sends a tenth signal to the baseband unit #1 based on the ninth signal, and correspondingly, the baseband unit #1 receives the tenth signal from the baseband unit #2.

A phase of the tenth signal received by the baseband unit #1 is a tenth phase. A manner of sending the tenth signal by the baseband unit #2 to the baseband unit #1 is similar to the manner of sending the second signal by the baseband unit #1 to the baseband unit #1 in step 520 in FIG. 5. Details are not described herein again.

Optionally, in S830, the baseband unit #1 obtains a reference phase difference.

A manner in which the baseband unit #1 obtains the reference phase difference is similar to the manner in which the baseband unit #1 obtains the reference phase difference in step S530 in FIG. 5 and the manner in which the baseband unit #1 obtains the reference phase difference in FIG. 6. Details are not described herein again.

S840: The baseband unit #1 or the baseband unit #2 adjusts a data signal on the fourth transmission path based on the ninth phase and the tenth phase.

The ninth phase and the tenth phase may be used to adjust the data signal on the fourth transmission path. For example, a measurement phase difference between the eighth phase and the tenth phase may be used to perform phase compensation on the data signal on the fourth transmission path. For another example, a fluctuation phase difference may be generated based on the ninth phase, the tenth phase, and the reference phase difference, and the fluctuation phase difference may be used to perform phase compensation on the data signal on the fourth transmission path. Adjusting the data signal on the fourth transmission path may be performed by the baseband unit #1 or the baseband unit #2. An execution manner is similar to the manners in steps S540A, S541B, and S542B in FIG. 5. Details are not described herein again.

Based on the technical solution shown in FIG. 8, the phase of the ninth signal sent by the baseband unit #1 on the fourth transmission path is the ninth phase, and the phase of the tenth signal received on the fourth transmission path is the tenth phase. Because the tenth signal is generated by the baseband unit #2 based on the ninth signal, and a phase difference between the ninth phase and the tenth phase carries impact of two-time and bidirectional transmission on a phase on the fourth transmission path, the ninth phase and the tenth phase may be used to adjust the data signal on the fourth transmission path, and reliability of data signal transmission on the fourth transmission path can be improved.

For ease of understanding embodiments of this application, the following describes a signal transmission manner with reference to FIG. 9 by using an example in which the first signal and the second signal are received and sent between the first apparatus and the second apparatus in the method shown in FIG. 5.

FIG. 9 is an illustrative diagram of signal transmission between a baseband unit and a radio unit.

Refer to FIG. 9. A first apparatus may perform baseband processing on a downlink data signal, and package a processed data signal based on a local clock according to the cpri protocol to generate a first signal. The first signal carries an initial phase (namely, a first phase) of the local clock, and the first apparatus sends the first signal to a second apparatus by using a serializer. The second apparatus receives the first signal by using a deserializer, and recovers a clock signal and the data signal from the first signal according to the cpri protocol. The recovered clock signal may lock a phase of the received first signal by using a phase locked loop, and an uplink data signal may be packaged according to the cpri protocol based on the recovered clock signal and an uplink data signal that has undergone radio frequency processing, to generate a second signal. The second signal carries the phase of the first signal received by the second apparatus, and the second apparatus sends the second signal to the first apparatus by using the serializer. The first apparatus receives the second signal by using the deserializer, and recovers the clock signal and the data signal from the second signal according to the cpri protocol. The recovered clock signal carries a second phase of the received second signal by the first apparatus, so that the first phase and the second phase may be used to adjust the data signal transmitted between the first apparatus and the second apparatus. In addition, the downlink data signal recovered by the radio unit and the uplink data signal recovered by the baseband unit may not be affected by a measurement process, that is, the technical solution may not affect normal running of a service data signal.

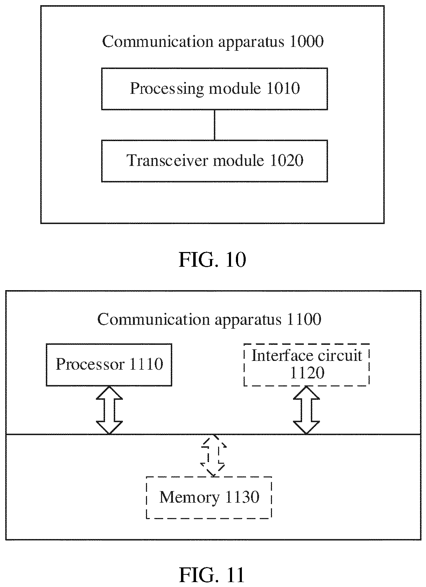

The methods provided in embodiments of this application are described above in detail with reference to FIG. 5 to FIG. 9. Apparatuses provided in embodiments of this application are described below in detail with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein again.

FIG. 10 and FIG. 11 are schematic diagrams of structures of possible apparatuses according to an embodiment of this application. These apparatuses may be configured to implement functions of the first apparatus (for example, the baseband unit #1) and the second apparatus (for example, the radio unit #1) in the foregoing method embodiments, and therefore can also implement beneficial effects of the foregoing method embodiments. In embodiments of this application, the apparatus may be a first apparatus or a second apparatus, or may be a module (for example, a chip) used in the first apparatus or the second apparatus.

As shown in FIG. 10, the apparatus 1000 includes a processing module 1010 and a transceiver module 1020. The apparatus 1000 is configured to implement functions of the first apparatus and the second apparatus in the method embodiment shown in FIG. 5. Alternatively, the apparatus 1000 may include a module configured to implement any function or operation of the first apparatus or the second apparatus in the method embodiment shown in FIG. 5, and the module may be all or partially implemented by using software, hardware, firmware, or any combination thereof.

When the apparatus 1000 is configured to implement the function of the first apparatus in the method embodiment shown in FIG. 5, the processing module 1010 is configured to generate a first signal; and the transceiver module 1020 is configured to send the first signal to the second apparatus, where a phase of the first signal sent by the first apparatus is a first phase; and the transceiver module 1020 is further configured to receive a second signal from the second apparatus, where the second signal and the first signal are two signals whose transmission directions are opposite on a first transmission path, a phase of the second signal received by the first apparatus is a second phase, and the first phase and the second phase are used to adjust a data signal on the first transmission path.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

For more detailed descriptions of the processing module 1010 and the transceiver module 1020, directly refer to the related descriptions in the method embodiments shown in FIG. 5 to FIG. 8. Details are not described herein again.

When the apparatus 700 is configured to implement a function of the second apparatus in the method embodiment shown in FIG. 5, the transceiver module 1020 is configured to receive the first signal from the first apparatus; the processing module 1010 is configured to generate the second signal, where the first signal and the second signal are used to adjust the data signal on the first transmission path; and the transceiver module 1020 is further configured to send the second signal, where the second signal and the first signal are two signals whose transmission directions are opposite on the first transmission path, and the phase of the second signal sent by the transceiver unit is determined based on the phase of the first signal received by the transceiver unit.

Based on this technical solution, the phase of the first signal sent by the first apparatus on the first transmission path is the first phase, and the phase of the second signal received on the first transmission path is the second phase. Because the second signal is generated by the second apparatus based on the first signal, and a phase difference between the first phase and the second phase carries impact of two-time and bidirectional transmission on a phase on the first transmission path, the first phase and the second phase may be used to adjust the data signal on the first transmission path, and reliability of data signal transmission on the first transmission path can be improved.

For more detailed descriptions of the processing module 1010 and the transceiver module 1020, directly refer to the related descriptions in the method embodiment shown in FIG. 5. Details are not described herein again.

As shown in FIG. 11, an apparatus 1100 includes a processor 1110, and optionally further includes an interface circuit 1120. The processor 1110 and the interface circuit 1120 are coupled to each other. It may be understood that the interface circuit 1120 may be a transceiver or an input/output interface. Optionally, the apparatus 1100 may further include a memory 1130 for storing instructions executed by the processor 1110, or input data needed by the processor 1110 to run the instructions, or data generated after the processor 1110 runs the instructions.

When the apparatus 1100 is configured to implement a function of the first apparatus in the method embodiments in FIG. 5 and FIG. 6, the processor 1110 is configured to implement a function of the foregoing processing module 1010, and the interface circuit 1120 is configured to implement a function of the foregoing transceiver module 1020.

When the apparatus 1100 is configured to implement a function of the second apparatus in the method embodiments in FIG. 5 and FIG. 6, the processor 1110 is configured to implement a function of the foregoing processing unit 1110, and the interface circuit 1120 is configured to implement a function of the foregoing transceiver module 1020.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor or the like.

In embodiments of this application, the memory may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, the procedures or functions in embodiments of this application are completely or partially executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape; or may be an optical medium, for example, a DVD; or may be a semiconductor medium, for example, a solid-state disk (solid-state disk, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that, in embodiments of this application, the "indication" may include a direct indication and an indirect indication, or may include an explicit indication and an implicit indication. Information indicated by a specific message (for example, the following phase information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may be indicated by using a pre-agreed arrangement order of each piece of information, thereby reducing indication overheads to some extent.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes.

## Claims

1. A communication method, wherein the method is applied to a first apparatus, and the method comprises:
sending a first signal to a second apparatus, wherein a phase of the first signal is a first phase; and
receiving a second signal from the second apparatus, wherein the second signal and the first signal are two signals whose transmission directions are opposite on a first transmission path, a phase of the second signal is a second phase, and the first phase and the second phase are used to adjust a data signal on the first transmission path.

2. The method according to claim 1, wherein the method further comprises:
sending phase information to the second apparatus, wherein the phase information is determined based on the first phase and the second phase, and the phase information is used to adjust the data signal.

3. The method according to claim 2, wherein the phase information indicates a measurement phase difference, and the measurement phase difference is determined based on the first phase and the second phase; or
the phase information indicates a fluctuation phase difference, and the fluctuation phase difference is determined based on the measurement phase difference and a reference phase difference.

4. The method according to claim 3, wherein the reference phase difference is a reference phase difference for signal transmission on the first transmission path, or the reference phase difference is a reference phase difference for signal transmission on a second transmission path, and the second transmission path is a transmission path different from the first transmission path.

5. The method according to any one of claims 2 to 4, wherein the phase information indicates a corresponding value obtained by converting the measurement phase difference into at least one frequency point, or the phase information indicates a corresponding value obtained by converting the fluctuation phase difference into the at least one frequency point.

6. The method according to claim 1, wherein the method further comprises:
adjusting the data signal based on the first phase and the second phase.

7. The method according to claim 6, wherein the adjusting the data signal based on the first phase and the second phase comprises:
adjusting, based on the first phase and the second phase, frequency domain information corresponding to the data signal;
adjusting, based on the first phase and the second phase, time domain information corresponding to the data signal; or
adjusting clock information based on the first phase and the second phase, wherein the clock information is used to transmit the data signal.

8. The method according to any one of claims 2 to 7, wherein
the sending phase information to the second apparatus comprises:
sending the phase information to the second apparatus through a first interface, wherein the first interface is any one of the following interfaces: a common public radio interface CPRI or an enhanced common public radio interface eCPRI.

9. A communication method, wherein the method is applied to a second apparatus, and the method comprises:
receiving a first signal from a first apparatus; and
sending a second signal to the first apparatus, wherein the second signal and the first signal are two signals whose transmission directions are opposite on a first transmission path, a phase of the sent second signal is determined based on a phase of the received first signal, and the first signal and the second signal are used to adjust a data signal on the first transmission path.

10. The method according to claim 9, wherein the method further comprises:
receiving phase information from the first apparatus, wherein the phase information is determined based on the first signal and the second signal; and
adjusting the data signal on the first transmission path based on the phase information.

11. The method according to claim 10, wherein the phase information indicates a measurement phase difference, and the measurement phase difference is determined based on the first phase of the first signal sent by the first apparatus and the second phase of the second signal received by the first apparatus, or
the phase information indicates a fluctuation phase difference, and the fluctuation phase difference is determined based on the measurement phase difference and a reference phase difference.

12. The method according to claim 11, wherein the reference phase difference is a reference phase difference for signal transmission on the first transmission path, or the reference phase difference is a reference phase difference for signal transmission on a second transmission path, and the second transmission path is a transmission path different from the first transmission path.

13. The method according to claim 11 or 12, wherein the phase information indicates a corresponding value obtained by converting the measurement phase difference into at least one frequency point, or the phase information indicates a corresponding value obtained by converting the fluctuation phase difference into the at least one frequency point.

14. The method according to any one of claims 10 to 13, wherein the adjusting the data signal on the first transmission path based on the phase information comprises:
adjusting, based on the phase information, frequency domain information corresponding to the data signal;
adjusting, based on the phase information, time domain information corresponding to the data signal; or
adjusting clock information based on the phase information, wherein the clock information is used to transmit the data signal.

15. The method according to any one of claims 9 to 14, wherein the receiving phase information from the first apparatus comprises:
receiving the phase information from the first apparatus through a first interface, wherein the first interface is any one of the following interfaces: a common public radio interface CPRI or an enhanced common public radio interface eCPRI.

16. A communication apparatus, comprising a module configured to perform the method according to any one of claims 1 to 8.

17. A communication apparatus, comprising a module configured to perform the method according to any one of claims 9 to 15.

18. A communication apparatus, comprising a processor, wherein the processor is coupled to a memory, the memory is configured to store a computer program or instructions, and the processor is configured to execute the computer program or the instructions to implement the method according to any one of claims 1 to 8.

19. A communication apparatus, comprising a processor, wherein the processor is coupled to a memory, the memory is configured to store a computer program or instructions, and the processor is configured to execute the computer program or the instructions to implement the method according to any one of claims 9 to 15.

20. A communication system, comprising the apparatus according to claim 16 or 18 and the apparatus according to claim 17 or 19.

21. A computer program product, comprising instructions, wherein when the instructions are run on a computer, the computer is enabled to perform the method according to any one of claims 1 to 8, or the computer is enabled to perform the method according to any one of claims 9 to 15.

22. A computer-readable storage medium, comprising a computer program, wherein when the computer program runs on a computer, the computer is enabled to perform the method according to any one of claims 1 to 8, or the computer is enabled to perform the method according to any one of claims 9 to 15.
